# EUROPEAN PATENT APPLICATION

(11) **EP 4 265 398 A1**
(43) Date of publication of application: **25.10.2023**
(21) Application number: 21906197.5
(22) Date of filing: 09.11.2021
(51) Int. Cl.: B29C 65/02, B29C 65/04, B29C 65/06, B29C 65/08, B29C 65/16, B29C 65/18, B32B 15/085

(54) **METHOD FOR MANUFACTURING METALLIC MEMBER-RESIN MEMBER BONDED BODY, AND FILM**

(30) Priority: 17.12.2020 JP 2020209503
(71) Applicant: Resonac Corporation, Tokyo 105-8518 (JP)
(72) Inventor: TAKAHASHI, Nobuyuki, Tokyo 105-8518 (JP); SATO, Masahiro, Tokyo 105-8518 (JP); OTANI, Kazuo, Tokyo 105-8518 (JP)
(74) Representative: Strehl Schübel-Hopf & Partner
(86) International application number: PCT/JP2021/041191
(87) International publication number: WO 2022/130833

(57) **Abstract**

Provided is a method for easily manufacturing a metal-polyolefin bonded body having high bonding strength. This method for manufacturing a metallic member-resin member bonded body comprises: preparing a film that includes at least one modified polyolefin layer selected from the group consisting of a layer containing a reaction product 1 of a maleic anhydride-modified polyolefin, a bifunctional epoxy resin, and a bifunctional phenol compound, a layer containing a reaction product 2 of a maleic anhydride-modified polyolefin and a thermoplastic epoxy resin, and a layer containing a mixture of a polyolefin and a thermoplastic epoxy resin; disposing the film on at least a part of the surface of a metallic substrate so as to expose the modified polyolefin layer, thereby forming a metallic member in which a resin coating layer is laminated on the metallic substrate; and bonding a resin member onto the resin coating layer of the metallic member.

## Description

### FIELD

The present disclosure relates to a method for manufacturing a metal member-resin member bonded body, and a film that can be used in manufacturing the bonded body.

### BACKGROUND

In the field of automobile parts and OA instruments, where weight reduction of products is required, there is a growing demand for metal-resin bonded bodies in which a metal material such as aluminum and a resin are bonded and integrated. In a metal-resin bonded body, in the case of aluminum being used as the metal material, the aluminum is subjected to surface treatment to ensure sufficient bonding strength between the metal and the resin. As the surface treatment, physical and chemical surface treatments such as blasting treatment, chemical conversion treatment, and anodizing treatment have been examined.

When a polyolefin such as polypropylene is used as the resin in a metal-resin bonded body, since a polyolefin is a low-polarity, difficult-to-adhere material, the use of an acid-modified polyolefin has been examined in order to improve bonding with a metal.

PTL 1 (JP 2016-16584 A) discloses a method of forming an adhesive layer containing a modified polypropylene resin having a polar group introduced therein on a surface preparation film provided on a surface of a substrate made of an aluminum alloy and bonding polypropylene thereto by means of compatibilizing and anchoring effects. PTL 1 also discloses a method of providing a modified polypropylene layer having a polar group via a surface treatment of an aluminum alloy using chromate-phosphate, chromate-chromate, zirconium oxide, or titanium-zirconium.

PTL 2 (WO 2016/199339) describes that a polypropylene resin layer is bonded to a metal substrate via a hydrophilic surface formed on the metal substrate, and a thermoplastic resin molded body is bonded to the polypropylene resin layer by means of compatibilizing and anchoring effects with the polypropylene resin layer.

PTL 3 (WO 2016/152118) discloses a method of forming an acid-modified polypropylene layer having specific melt viscosity, melting point, and crystallinity on aluminum alloy.

PTL 4 (JP 2018-154034 A) discloses a method of forming a 15 to 40 µm-thick layer composed of an epoxy resin and a blocked isocyanate as a first layer on a surface of a chemical conversion film of a metal and providing a 4 to 30 µm acid-modified polyolefin layer as a second layer.

### [CITATION LIST]

### [PATENT LITERATURE]

[PTL 1] JP 2016-16584 A
[PTL 2] WO 2016/199339
[PTL 3] WO 2016/152118
[PTL 4] JP 2018-154034 A

### SUMMARY

### [TECHNICAL PROBLEM]

However, the metal-polyolefin bonded bodies do not have sufficient bonding strength in the above prior art, and it is desirable to further improve bonding strength and durability.

When manufacturing a metal-polyolefin bonded body using a metal substrate having large dimensions, formation of an acid-modified polyolefin layer on the metal substrate to bond the metal and the polyolefin limits the processing equipment that can accommodate the metal substrate and involves complicated steps depending on the shape of the metal substrate, and thus may be technically difficult or economically disadvantageous.

In view of the technical background described above, an object of the present disclosure is to provide a method for conveniently manufacturing a metal-polyolefin bonded body having a high bonding strength.

### [SOLUTION TO PROBLEM]

The present disclosure encompasses the following aspects.
[1] A method for manufacturing a metal member-resin member bonded body, comprising:
   preparing a film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin;
   placing the film on at least a portion of a surface of a metal substrate so that the modified polyolefin layer is exposed to form a metal member having a resin coating layer laminated on the metal substrate; and
   bonding a resin member onto the resin coating layer of the metal member.
[2] The method according to [1], wherein the bonding is carried out by at least one method selected from the group consisting of an ultrasonic welding method, a vibration welding method, an electromagnetic induction method, a radiofrequency method, a laser method, and a heat press method.
[3] The method according to [1], wherein the bonding is carried out simultaneously with molding of a resin member by injection molding, transfer molding, press molding, filament winding molding, or hand lay-up molding on the resin coating layer of the metal substrate.
[4] A method for manufacturing a metal member-resin member bonded body, comprising:
   preparing a film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin;
   interposing the film between a metal substrate and a resin member so that the modified polyolefin layer is in contact with the resin member; and
   bonding the metal substrate and the resin member together via the film.
[5] The method according to [4], wherein the bonding is carried out by at least one method selected from the group consisting of an ultrasonic welding method, a vibration welding method, an electromagnetic induction method, a radiofrequency method, a laser method, and a heat press method.
[6] The method according to any of [1] to [5], wherein the reaction product 1 is obtained by subjecting a bifunctional epoxy resin and a bifunctional phenol compound to a polyaddition reaction in a solution comprising a maleic anhydride-modified polyolefin.
[7] The method according to any of [1] to [5], wherein the reaction product 2 is obtained by reacting a thermoplastic epoxy resin generated by a polyaddition reaction of a bifunctional epoxy resin and a bifunctional phenol compound with a maleic anhydride-modified polyolefin.
[8] The method according to any of [1] to [5], wherein the mixture is a mixture of polypropylene and a thermoplastic epoxy resin.
[9] The method according to any of [1] to [8], wherein the film is composed of a plurality of layers including the modified polyolefin layer and a layer other than the modified polyolefin layer, and at least one layer other than the modified polyolefin layer is at least one selected from a thermoplastic epoxy resin layer formed of a resin composition comprising a thermoplastic epoxy resin and a curable resin layer formed of a resin composition comprising a curable resin.
[10] The method according to [9], wherein the curable resin is at least one selected from the group consisting of urethane resins, epoxy resins, vinyl ester resins, and unsaturated polyester resins.
[11] The method according to any of [1] to [10], wherein
   the metal substrate has a functional group-containing layer laminated on a surface in contact with the film; and
   the functional group-containing layer comprises at least one functional group selected from the group consisting of (1) to (7) below:
      (1) at least one functional group derived from a silane coupling agent and selected from the group consisting of a glycidyl group, an amino group, a (meth)acryloyl group, and a mercapto group;
      (2) a functional group generated by reacting an amino group derived from a silane coupling agent with at least one selected from a glycidyl compound and a thiol compound;
      (3) a functional group generated by reacting a mercapto group derived from a silane coupling agent with at least one selected from the group consisting of a glycidyl compound, an amino compound, an isocyanate compound, a compound having a (meth)acryloyl group and a glycidyl group, and a compound having a (meth)acryloyl group and an amino group;
      (4) a functional group generated by reacting a (meth)acryloyl group derived from a silane coupling agent with a thiol compound;
      (5) a functional group generated by reacting a glycidyl group derived from a silane coupling agent with at least one selected from the group consisting of a compound having an amino group and a (meth)acryloyl group, an amino compound, and a thiol compound;
      (6) an isocyanato group derived from an isocyanate compound; and
      (7) a mercapto group derived from a thiol compound.
[12] The method according to any of [1] to [11], wherein a surface of the metal substrate is subjected to at least one surface treatment selected from the group consisting of blasting treatment, polishing treatment, etching treatment, and chemical conversion treatment.
[13] A film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin.

### [ADVANTAGEOUS EFFECTS OF INVENTION]

According to the method for manufacturing a metal member-resin member bonded body of the present disclosure, a metal-polyolefin bonded body having high bonding strength can be conveniently manufactured. The film of the present disclosure can be used advantageously in manufacturing a metal-polyolefin bonded body.

### BRIEF DESCRIPTION OF DRAWINGS

FIG. 1 is an explanatory view of a manufacturing method for the metal member-resin member bonded body in the first embodiment.
FIG. 2 is an explanatory view of another manufacturing method for the metal member-resin member bonded body in the first embodiment.
FIG. 3 is an explanatory view of a manufacturing method for the metal member-resin member bonded body in the second embodiment.
FIG. 4 is a schematic cross-sectional view of the metal member-resin member bonded body of one embodiment.
FIG. 5 is a schematic cross-sectional view of the metal member-resin member bonded body having a functional group-containing layer.
FIG. 6 is a schematic cross-sectional view of the metal member-resin member bonded body having an adhesive layer.
FIG. 7 is a set of SEM photographs of a boehmite film.

### DESCRIPTION OF EMBODIMENTS

The embodiments of the present disclosure will be described below with reference to the drawings.

In the present disclosure, excluding when explicitly described herein, the term "metal" is used to mean both a pure metal consisting of a single metallic element and an alloy in which a pure metal is mixed with one or more other elements. For example, the term "aluminum" includes the pure metal of aluminum and alloys thereof.

In the present disclosure, bonding means connecting articles together. Adhesion is a subordinate concept thereof, and means bringing two adherends (objects to be adhered) into a bonded state via organic materials (such as curable resins and thermoplastic resins) such as tapes and adhesives.

### [First embodiment: method for manufacturing metal member-resin member bonded body]

The method for manufacturing a metal member-resin member bonded body of the first embodiment comprises: preparing a film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin; placing the film on at least a portion of a surface of a metal substrate so that the modified polyolefin layer is exposed to form a metal member having a resin coating layer laminated on the metal substrate; and bonding a resin member onto the resin coating layer of the metal member.

### <Film>

The resin coating layer laminated on the metal substrate contained in the metal member is formed using a film comprising the above modified polyolefin layer.

The film may be one layer or may be composed of a plurality of layers. The film can be composed of a plurality of layers including the modified polyolefin layer and a layer other than the modified polyolefin layer, and the layer other than the modified polyolefin layer can be at least one selected from a thermoplastic epoxy resin layer and a curable resin layer. In this case, the modified polyolefin layer of the film is bonded to the resin member, and the layer other than the modified polyolefin layer of the film is bonded to a metal substrate having or not having been subjected to a surface treatment or a functional group-containing layer. Thermoplastic epoxy resin layer, curable resin layer, surface treatment, and functional group-containing layer will be described below.

### [Modified polyolefin layer]

At least one layer of the film is a modified polyolefin layer formed of a resin composition comprising a modified polyolefin. The film comprising a modified polyolefin layer can adhere (bond) the metal substrate and the resin member together at high bonding strength.

The modified polyolefin layer is at least one selected from the group consisting of a layer comprising a reaction product 1 obtained by subjecting a bifunctional epoxy resin and a bifunctional phenol compound to a polyaddition reaction in the presence of a maleic anhydride-modified polyolefin and simultaneously reacting therewith a maleic anhydride in a maleic anhydride-modified polyolefin skeleton, a layer comprising a reaction product 2 obtained by reacting a maleic anhydride in a maleic anhydride-modified polyolefin skeleton with a thermoplastic epoxy resin generated by a polyaddition reaction of a bifunctional epoxy resin and a bifunctional phenol compound, and a layer comprising a mixture of a thermoplastic epoxy resin and a polyolefin.

### (Reaction product 1)

The reaction product 1 can be obtained by subjecting a bifunctional epoxy resin and a bifunctional phenol compound to a polyaddition reaction in a maleic anhydride-modified polyolefin solution in the presence of a catalyst. At this time, the maleic anhydride-modified polyolefin presumably reacts with the bifunctional epoxy resin, the bifunctional phenol compound, and a thermoplastic epoxy resin generated from the bifunctional epoxy resin and the bifunctional phenol compound described below in the section of reaction product 2.

### (Maleic anhydride-modified polyolefin)

The maleic anhydride-modified polyolefin is obtained by grafting maleic anhydride to a polyolefin. Examples thereof include maleic anhydride-modified polyethylene and maleic anhydride-modified polypropylene. Specific examples of the maleic anhydride-modified polyolefin include Kayabrid 002PP, 002PP-NW, 003PP, and 003PP-NW manufactured by Kayaku Akzo Co., Ltd. and the Modic series manufactured by Mitsubishi Chemical Corporation. SCONA TPPP2112GA, TPPP8112GA, or TPPP9212GA manufactured by BYK may be used in combination with a maleic anhydride-modified polyolefin as a maleic anhydride-functionalized polypropylene additive.

### (Bifunctional epoxy resin)

Examples of the bifunctional epoxy resin include bisphenol type epoxy resins and biphenyl type epoxy resins. The bifunctional epoxy resin may be used alone, or two or more thereof may be used in combination. Specific examples of the bifunctional epoxy resin include "jER^{™} 828", "jER^{™} 834", "jER^{™} 1001", "jER^{™} 1004", "jER^{™} 1007", and "jER^{™} YX-4000" manufactured by Mitsubishi Chemical Corporation.

### (Bifunctional phenol compound)

Examples of the bifunctional phenol compound include bisphenols and biphenols. The bifunctional phenol compound may be used alone, or two or more thereof may be used in combination. Examples of the combination of bifunctional phenol compounds include a bisphenol A type epoxy resin and bisphenol A; a bisphenol A type epoxy resin and bisphenol F; a biphenyl type epoxy resin and 4,4'-biphenol; and "WPE190" and "EX-991L" manufactured by Nagase ChemteX Corporation.

The polyaddition reaction catalyst for the thermoplastic epoxy resin is preferably, for example, tertiary amines such as triethylamine and 2,4,6-tris(dimethylaminomethyl)phenol; and phosphorus-based compounds such as triphenylphosphine.

### (Reaction product 2)

The reaction product 2 can be obtained by reacting a thermoplastic epoxy resin generated by a polyaddition reaction of a bifunctional epoxy resin and a bifunctional phenol compound with a maleic anhydride-modified polyolefin. As the maleic anhydride-modified polyolefin, the bifunctional epoxy resin, and the bifunctional phenol compound used in this reaction, the same ones used in generating the reaction product 1 can be used.

### (Thermoplastic epoxy resin)

The thermoplastic epoxy resin used in manufacturing the reaction product 2 is also called an *in-situ* polymerizable phenoxy resin, an *in-situ* curable phenoxy resin, or an *in-situ* curable epoxy resin, and forms a thermoplastic structure, i.e., a linear polymer structure, by a polyaddition reaction of a bifunctional epoxy resin and a bifunctional phenol compound in the presence of a catalyst. A linear polymer means a one-dimensional linear polymer that does not comprise a crosslinked structure in the polymer molecule. Thermoplastic epoxy resins differ from curable resins that form a three-dimensional network with a crosslinked structure, and have thermoplasticity.

The total amount of bifunctional epoxy resin and bifunctional phenol compound used in manufacturing the reaction product 1 and the reaction product 2 relative to 100 parts by mass of the maleic anhydride-modified polyolefin is preferably 5 to 100 parts by mass, more preferably 5 to 60 parts by mass, and even more preferably 10 to 30 parts by mass.

The modes of reaction when obtaining the reaction product 1 and the reaction product 2 are diverse, such as a reaction of a maleic anhydride-modified polyolefin and a bifunctional epoxy resin, a reaction of a maleic anhydride-modified polyolefin and a bifunctional phenol compound, a reaction of interlinking of maleic anhydride via epoxy, a reaction of an epoxy group at a thermoplastic epoxy resin terminal and maleic anhydride, and a reaction of a secondary hydroxy group in a thermoplastic epoxy resin skeleton and maleic anhydride, and specific aspects based on combinations thereof cannot be comprehensively expressed. Thus, it may be impossible or impractical to directly identify the modified polyolefins obtained as reaction product 1 and reaction product 2 by structure or properties.

The mixture of a thermoplastic epoxy resin and a polyolefin can be obtained by mixing the same thermoplastic epoxy resin used in manufacturing the reactant product 2 described above and a polyolefin by a common method.

### (Polyolefin)

Any polyolefin used in the resin member can be used as the polyolefin used in forming the mixture. The polyolefin is not particularly limited, and may by any general synthetic resin. Examples of the polyolefin include polyethylene and polypropylene. Polypropylene is preferable.

### [Thermoplastic epoxy resin layer]

The film may be composed of a plurality of layers including a modified polyolefin layer and a layer other than the modified polyolefin layer, and at least one layer other than the modified polyolefin layer can be composed of a thermoplastic epoxy resin layer formed of a resin composition comprising a thermoplastic epoxy resin.

The resin composition comprising a thermoplastic epoxy resin preferably comprises 40% by mass or greater of a thermoplastic epoxy resin, and more preferably comprises 70% by mass or greater thereof.

### (Thermoplastic epoxy resin)

The thermoplastic epoxy resin, similar to the thermoplastic epoxy resin used in manufacturing the reaction product 2, is a resin obtained by a polyaddition reaction of a bifunctional epoxy resin and a bifunctional phenol compound in the presence of a catalyst, forms a thermoplastic structure, i.e., a linear polymer structure, differs from a curable resin that forms a three-dimensional network with a crosslinked structure, and has thermoplasticity. A thermoplastic epoxy resin having such characteristics can form a thermoplastic epoxy resin layer having excellent bonding property with a modified polyolefin layer.

The composition comprising a thermoplastic epoxy resin monomer may comprise a solvent in order to allow the polyaddition reaction of the thermoplastic epoxy resin to proceed sufficiently and, if necessary, an additive such as a colorant. In this case, of the components other than the solvent of the composition, the thermoplastic epoxy resin monomer is preferably the main component. The main component means that the content of the thermoplastic epoxy resin monomer is 50 to 100% by mass. The content of the thermoplastic epoxy resin monomer is preferably 60% by mass or greater and more preferably 80% by mass or greater.

The monomer for obtaining a thermoplastic epoxy resin is preferably a combination of a bifunctional epoxy resin and a bifunctional phenolic compound.

The polyaddition reaction is preferably carried out by heating at a temperature of 120 to 200°C for 5 to 90 min, depending on the reaction compounds. Specifically, the thermoplastic epoxy resin layer can be formed by applying the composition, volatilizing the solvent as appropriate, and then carrying out the polyaddition reaction by heating.

### [Curable resin layer]

The film can be composed of a plurality of layers including a modified polyolefin layer and a layer other than the modified polyolefin layer, wherein the layer other than the modified polyolefin layer is composed of a curable resin layer formed of a resin composition comprising a curable resin.

The resin composition comprising a curable resin may comprise a solvent in order to allow the curing reaction of the curable resin to proceed sufficiently and, if necessary, an additive such as a colorant. In this case, of the components other than the solvent of the resin composition, the curable resin is preferably the main component. The main component means that the content of the curable resin is 40 to 100% by mass. The content of the curable resin is preferably 60% by mass or greater, more preferably 70% by mass or greater, and most preferably 80% by mass or greater.

Examples of the curable resin include urethane resins, epoxy resins, vinyl ester resins, and unsaturated polyester resins.

The curable resin layer may be formed of one of these resins, or may be formed of a mixture of two or more. The curable resin layer may be composed of a plurality of layers, and each layer may be formed of a resin composition comprising a different curable resin.

The method of forming the curable resin layer using a resin composition comprising a curable resin is not particularly limited. Examples thereof include a spray coating method and a dipping method.

In the present disclosure, the curable resin means a resin that is cured by crosslinking, and is not limited to a heat-curing type and includes room temperature-curing and photo-curing types. The photo-curing type can also be cured in a short time by irradiation with visible light or ultraviolet rays. The photo-curing type may be used in combination with the heat-curing type and/or the room temperature-curing type. Examples of the photo-curing type include vinyl ester resins such as "Ripoxy^{™} LC-760" and "Ripoxy^{™} LC-720" manufactured by Showa Denko K.K.

### (Urethane resin)

The urethane resin is generally a resin obtained by reacting an isocyanate group of an isocyanate compound with a hydroxy group of a polyol compound, and is preferably a urethane resin corresponding to that defined in ASTM D16 as a "coating containing a polyisocyanate at 10% by weight or greater of nonvolatile vehicle components". The urethane resin may be a one-part type or a two-part type.

Examples of the one-part type urethane resin include oil-modified type (cured by oxidation polymerization of unsaturated fatty acid groups), moisture-curable type (cured by reacting isocyanato groups with water in the air), block type (cured by reacting isocyanato groups regenerated by dissociation of a blocking agent by heating with hydroxy groups), and lacquer type (cured when a solvent volatilizes and dries). Of these, moisture-curable one-part urethane resins are preferably used from the viewpoint of ease of handling. Specific examples of the moisture-curable one-part urethane resin include "UM-50P" manufactured by Showa Denko K.K.

Examples of the two-part urethane resin include catalyst-curable type (cured by reacting isocyanato groups with water in the air in the presence of a catalyst) and polyol-curable type (cured by reacting isocyanato groups with hydroxy groups of a polyol compound).

Examples of the polyol compound in the polyol-curable type include polyester polyols and polyether polyol-phenol resins.

Examples of the isocyanate compound having an isocyanato group in the polyol-curable type include aliphatic isocyanates such as hexamethylene diisocyanate (HDI), tetramethylene diisocyanate, and dimer acid diisocyanate; aromatic isocyanates such as 2,4- or 2,6-tolylene diisocyanate (TDI) or mixtures thereof, p-phenylene diisocyanate, xylylene diisocyanate, and diphenylmethane diisocyanate (MDI) or polymeric MDI as polynuclear mixtures thereof; and alicyclic isocyanates such as isophorone diisocyanate (IPDI).

For the blending ratio of the polyol compound and the isocyanate compound in the polyol-curable two-part urethane resin, the hydroxy group/isocyanato group molar equivalent ratio is preferably in the range of 0.7 to 1.5.

Examples of a urethanization catalyst used in the two-part urethane resin include amine-based catalysts such as triethylenediamine, tetramethylguanidine, N,N,N',N'-tetramethylhexane-1,6-diamine, dimethyl ether amine, N,N,N',N",N"-pentamethyldipropylene-triamine, N-methylmorpholine, bis(2-dimethylaminoethyl)ether, dimethylaminoethoxyethanol, and triethylamine; and organotin-based catalysts such as dibutyltin diacetate, dibutyltin dilaurate, dibutyltin thiocarboxylate, and dibutyltin dimaleate.

In the polyol-curable type, it is generally preferable that 0.01 to 10 parts by mass of a urethanization catalyst be blended with 100 parts by mass of a polyol compound.

### (Epoxy resin)

The epoxy resin is a resin having at least two epoxy groups per molecule. Examples of a prepolymer before curing of epoxy resin include ether-based bisphenol type epoxy resins, novolac type epoxy resins, polyphenol type epoxy resins, aliphatic epoxy resins, ester-based aromatic epoxy resins, alicyclic epoxy resins, and ether-ester-based epoxy resins. Of these, bisphenol A type epoxy resins are preferably used. The epoxy resin may be used alone, or two or more thereof may be used in combination.

Specific examples of the bisphenol A type epoxy resin include "jER^{™} 828" and "jER^{™} 1001" manufactured by Mitsubishi Chemical Corporation.

Specific examples of the novolac type epoxy resin include "D.E.N.^{™} 438" manufactured by The Dow Chemical Company.

Examples of a curing agent used in the epoxy resin include aliphatic amines, aromatic amines, acid anhydrides, phenolic resins, thiols, imidazoles, and cationic catalysts. By using a curing agent together with a long-chain aliphatic amine and/or a thiol, a film having a large elongation and excellent impact resistance can be formed.

Specific examples of the thiol are not particularly limited. Examples thereof include pentaerythritol tetrakis(3-mercaptopropionate) (for example, "QX40" manufactured by Mitsubishi Chemical Corporation and "QE-340M" manufactured by Toray Fine Chemicals Co., Ltd.), ether-based primary thiols (for example, Capcure 3-800 manufactured by Cognis), 1,4-bis(3-mercaptobutyryloxy)butane (for example, "Karenz MT^{™} BD1" manufactured by Showa Denko K.K.), pentaerythritol tetrakis(3-mercaptobutyrate) (for example, "Karenz MT^{™} PE1" manufactured by Showa Denko K.K.), and 1,3,5-tris(3-mercaptobutyloxyethyl)-1,3,5-triazine-2,4,6(1H,3H,SH)-trione (for example, "Karenz MT^{™} NR1" manufactured by Showa Denko K.K.). Of these, pentaerythritol tetrakis(3-mercaptobutyrate) (for example, "Karenz MT^{™} PE1" manufactured by Showa Denko K.K.) is preferable from the viewpoints of film elongation and impact resistance.

### (Vinyl ester resin)

The vinyl ester resin is obtained by dissolving a vinyl ester compound in a polymerizable monomer (for example, styrene). Vinyl ester resins are also commonly referred to as epoxy (meth)acrylate resins. In the present disclosure, vinyl ester resins also encompass urethane (meth)acrylate resins.

As the vinyl ester resin, for example, those described in "Polyester Resin Handbook" (published by The Nikkan Kogyo Shimbun, Ltd. in 1988) and "Paint Glossary" (published by the Japan Society of Color Material in 1993) can be used. Specific examples of the vinyl ester resin include "Ripoxy^{™} R-802", "Ripoxy^{™} R-804", and "Ripoxy^{™} R-806" manufactured by Showa Denko K.K.

Examples of the urethane (meth)acrylate resin include radically polymerizable unsaturated group-containing oligomers obtained by reacting an isocyanate compound with a polyol compound and then reacting with a hydroxy group-containing (meth)acrylic monomer (and a hydroxy group-containing allyl ether monomer, as needed). Specific examples of the urethane (meth)acrylate resin include "Ripoxy^{™} R-6545" manufactured by Showa Denko K.K.

The vinyl ester resin can be cured by radical polymerization by heating in the presence of a catalyst such as an organic peroxide.

Examples of the organic peroxide include ketone peroxides, peroxyketals, hydroperoxides, diallyl peroxides, diacyl peroxides, peroxyesters, and peroxydicarbonates. By combining these organic peroxides with a cobalt metal salt, curing at room temperature is possible.

Examples of the cobalt metal salt include cobalt naphthenate, cobalt octylate, and cobalt hydroxide. Of these, cobalt naphthenate and cobalt octylate are preferable.

### (Unsaturated polyester resin)

The unsaturated polyester resin is a condensation product (unsaturated polyester) obtained by an esterification reaction between a polyol compound and an unsaturated polybasic acid (and a saturated polybasic acid, as needed) dissolved in a polymerizable monomer (for example, styrene).

As the unsaturated polyester resin, for example, those described in "Polyester Resin Handbook" (published by The Nikkan Kogyo Shimbun, Ltd. in 1988) and "Paint Glossary" (published by the Japan Society of Color Material in 1993) can be used. Specific examples of the unsaturated polyester resin include "Rigolac^{™}" manufactured by Showa Denko K.K.

The unsaturated polyester resin can be cured by radical polymerization by heating in the presence of the same catalyst as in the vinyl ester resin.

### [Optional component]

One or more layers constituting the film may comprise, as optional components, a film forming agent, a tackifier, or both. Examples of additional optional components that can be used in the film include fillers, colorants such as pigments and dyes, thermal stabilizers, ultraviolet absorbers, and antioxidants.

### (Film forming agent)

By using a film forming agent, film formability when manufacturing the film and shape retention after manufacturing can be increased. Examples of the film forming agent include polyethylene, polypropylene, polyvinyl chloride, chlorinated polyolefins such as chlorinated polyethylene and chlorinated polypropylene, thermoplastic polyurethane, polystyrene, polystyrene copolymers such as polystyrene-maleic anhydride copolymer, thermoplastic polyester, polyether, thermoplastic polyamide, and cellulosic polymers such as hydroxyethyl cellulose, polyvinyl acetal, and polyvinyl butyral.

### (Tackifier)

By using a tackifier, the film can be reliably fixed to the metal substrate, and the resin coating layer can be formed at desired positions with high accuracy. Examples of the tackifier include rosin resins such as disproportionated rosin esters, polymerized rosin esters, and hydrogenated rosin esters; terpene resins, terpene phenolic resins, aromatic modified terpene resins, hydrogenated terpene resins, aliphatic (C5) petroleum resins, aromatic (C9) petroleum resins, aliphatic-aromatic (C5-C9) petroleum resins, hydrogenated petroleum resins, coumarone-indene resins, phenolic resins, styrene-based resins, and xylene-based resins.

The film can be produced by, for example, the following procedure. A film precursor composition 1 comprising (1) a reaction product 1 obtained by subjecting a bifunctional epoxy resin and a bifunctional phenol compound to a polyaddition reaction in the presence of a maleic anhydride-modified polyolefin and simultaneously reacting therewith a maleic anhydride in a maleic anhydride-modified polyolefin skeleton, (2) a reaction product 2 obtained by reacting a thermoplastic epoxy resin generated by a polyaddition reaction of a bifunctional epoxy resin and a bifunctional phenol compound with a maleic anhydride in a maleic anhydride-modified polyolefin skeleton, or (3) a mixture of a thermoplastic epoxy resin and a polyolefin and, if necessary, a solvent and optional components is prepared. The reaction product 1, the reaction product 2, and the mixture of a thermoplastic epoxy resin and a polyolefin are the same as those described for the modified polyolefin layer. The film precursor composition 1 is applied, sprayed, or extrusion-laminated on a release film or release paper having, for example, a silicone-based release coating to form a film having a dry thickness of 1 µm to 10 mm. The application can be carried out using a bar coater or a roll coater. The spraying can be carried out using a spray coater. The extrusion-lamination can be carried out using a single-screw or twin-screw extruder. Subsequently, a film can be formed on the release film or release paper by leaving in an environment of room temperature to 40°C to allow the solvent to volatilize. After the film is formed, the release film or release paper may be used as a film carrier (support) for handling the film, or the film may be peeled from the release film or release paper to obtain a self-supporting film.

In the modified polyolefin layer of the film, the reaction product 1, the reaction product 2, or a component (for example, the bifunctional epoxy resin, the bifunctional phenol compound, or the maleic anhydride-modified polyolefin) that is a constituting unit of the thermoplastic epoxy resin may be contained in a completely reacted state, or a portion thereof may be contained in an unreacted state. In case of the latter, when bonding the metal substrate or resin member to the film (resin coating layer), an unreacted component may be further reacted. Due to reaction of the unreacted component, it may be possible to increase the bonding strength between the film (resin coating layer) and the metal substrate or resin member.

A film composed of a plurality of layers including a modified polyolefin layer and a layer other than the modified polyolefin layer can be produced by, for example, the following procedure. A film precursor composition 2 comprising (1a) a resin composition comprising a thermoplastic epoxy resin, (1b) a composition comprising a thermoplastic epoxy resin monomer, or (2) a resin composition comprising a curable resin and, if necessary, a solvent and optional components is prepared. The resin composition comprising a thermoplastic epoxy resin and the composition comprising a thermoplastic epoxy resin monomer are the same as those described for the thermoplastic epoxy resin layer. The resin composition comprising a curable resin is the same as that described for the curable resin layer. The film precursor composition 2 is applied, sprayed, or extrusion-laminated on a release film or release paper having, for example, a silicone-based release coating to form a film having a dry thickness of 1 µm to 10 mm. Subsequently, a thermoplastic epoxy resin layer or a curable resin layer is formed on the release film or release paper by leaving in an environment of room temperature to 40°C to allow the solvent to volatilize, by heating to proceed with the polyaddition reaction or curing reaction, or by irradiating with visible light or ultraviolet rays to proceed with the curing reaction. By forming a modified polyolefin layer on any of these layers according to the above procedure, a film composed of a plurality of layers including a modified polyolefin layer and a layer other than the modified polyolefin layer can be obtained. The order in which the modified polyolefin layer and the layer other than the modified polyolefin layer are formed may be altered. Specifically, a thermoplastic epoxy resin layer or a curable resin layer may be formed on a preformed modified polyolefin layer by the above procedure.

In the thermoplastic epoxy resin layer or the curable resin layer of the film, a component (for example, the bifunctional epoxy resin, the bifunctional phenol compound, the polyol, or the isocyanate compound) that is a constituting unit of either resin may be contained in a completely reacted state, or a portion thereof may be contained in an unreacted state. In case of the latter, when bonding the metal substrate to the film, an unreacted component may be further reacted. Due to reaction of the unreacted component, it may be possible to increase the bonding strength between the film and the metal substrate.

The thickness of the film depends on the type of resin in the resin member and the bonding area, but is preferably 1 µm to 10 mm, more preferably 2 µm to 8 mm, and even more preferably 3 µm to 5 mm, from the viewpoint of obtaining excellent bonding property between the metal substrate and the resin member. Specifically, when a metal substrate is bonded to a carbon fiber reinforced resin member (CFRP member) or a glass fiber reinforced rein member (GFRP member), the thickness of the film is preferably 0.1 to 10 mm, more preferably 0.2 to 8 mm, or even more preferably 0.5 to 5 mm. When the film has a plurality of layers, the thickness of the film is the total thickness of all layers.

The planar shape of the film can be appropriately set according to the bonding portion between the metal substrate and the resin member and the desired bonding strength. The planar shape of the film can be, for example, a geometric shape such as a square, a rectangle, a triangle, a circle, or an oval. The planar shape of the film can also be grid-like or comb-like so that one continuous film provides a plurality of bonding portions. By forming a plurality of through-holes in a part of or the entire film, contact area between the film and the metal substrate and resin member can be decreased to adjust the bonding strength.

### <Metal member>

By placing the film on at least a portion of the surface of the metal substrate so that the modified polyolefin layer of the film is exposed, a metal member having a resin coating layer laminated on the metal substrate can be formed. Thus, the resin coating layer of the present disclosure is derived from the film. When placing the film on a surface of the metal substrate, the film is preferably heated, and more preferably heated under pressure. Heating can be at 50°C to 180°C. Pressure can be applied at 0.01 MPa to 50 MPa. When the metal substrate has a surface-treated portion and/or a functional group-containing layer described below, the film is placed thereon. A film composed of a plurality of layers including a modified polyolefin layer and a layer other than the modified polyolefin layer is laminated so that the modified polyolefin layer is exposed, i.e., the layer other than the modified polyolefin layer is in contact with the metal substrate having or not having been subjected to a surface treatment or the functional group-containing layer.

The resin coating layer is formed having excellent bonding property with a surface of the metal substrate, and exhibits excellent bonding property also with the resin member. Consequently, the metal substrate is provided with excellent adhesive property (bonding property via the resin coating layer) to the resin member comprising a polyolefin. Therefore, it can be said that the resin coating layer is a primer layer arranged on a bonding surface of the metal substrate. A primer layer herein means a layer that is interposed between a metal substrate and a resin member and improves adhesive property (bonding property via a resin coating layer) of the metal substrate to the resin member when bonding a metal member and the resin member together.

In the first embodiment, since the surface of the metal substrate is protected by the resin coating layer, it is possible to suppress adhesion of dirt to a surface of the metal substrate and deterioration such as oxidation. Thus, it is possible to obtain a metal member that is able to maintain excellent adhesive property to a resin member even when kept in storage for a long period of several months.

### <Metal substrate>

The metal in the metal substrate is not particularly limited. Examples thereof include aluminum, iron, titanium, magnesium, stainless steel, and copper. Of these, aluminum is particularly preferably used from the viewpoints of lightness and workability. The metal substrate may be an extruded material, a die-cast material, a forged material, or a cast material.

### [Surface treatment (portion)]

The metal substrate preferably has a surface treatment at least on the surface to be bonded to the resin member. A surface-treated portion (surface treatment portion) of the metal substrate herein is regarded as a portion of the metal substrate.

Examples of the surface treatment include washing/degreasing treatment with a solvent, blasting treatment, polishing treatment, plasma treatment, laser treatment, etching treatment, and chemical conversion treatment. A surface treatment that produces hydroxy groups on a surface of the metal substrate is preferable. One of these surface treatments may be used alone, or two or more thereof may be applied. As a specific method of these surface treatments, any known method can be used.

In the surface treatment, contaminants on a surface of the metal substrate are removed and/or, for the purpose of an anchoring effect, a surface of the metal substrate is roughened by forming fine irregularities thereon. Consequently, bonding property between the surface of the metal substrate and the film can be improved, and as a result, the adhesive property (bonding property via the film) between the metal substrate and the resin member to be bonded can be improved. From such a viewpoint, the surface treatment is preferably at least one selected from the group consisting of blasting treatment, polishing treatment, etching treatment, and chemical conversion treatment.

### (Washing/Degreasing treatment)

Examples of the washing/degreasing treatment with a solvent include degreasing a surface of the metal substrate using an organic solvent such as acetone or toluene. The washing/degreasing treatment is preferably carried out before other surface treatments.

### (Blasting treatment)

Examples of the blasting treatment include shot blasting and sand blasting.

### (Polishing treatment)

Examples of the polishing treatment include buff polishing using an abrasive cloth, roll polishing using sandpaper, and electropolishing.

### (Plasma treatment)

A plasma treatment is a method in which a plasma beam is emitted from a rod called an electrode onto a surface of a material using a high-voltage power supply, thereby first cleaning off any foreign matter or oil film present on the surface and then energizing a gas, which depends on the material, to excite molecules on the surface. Examples of the plasma treatment include atmospheric pressure plasma treatment which can impart hydroxy groups or other polar groups to the surface.

### (Laser treatment)

A laser treatment is a technique of improving surface characteristics of a material by rapidly heating and cooling only the surface layer by laser irradiation, and is an effective method for roughening a surface. Any known laser treatment technique can be used as the laser treatment.

### (Etching treatment)

Examples of the etching treatment include chemical etching treatments such as alkali method, phosphoric acid-sulfuric acid method, fluoride method, chromic acid-sulfuric acid method, and iron salt method; and electrochemical etching treatments such as electrolytic etching.

When the metal substrate is aluminum, the etching treatment is preferably an alkali method using an aqueous sodium hydroxide solution or an aqueous potassium hydroxide solution as an etchant, and more preferably a caustic soda method using an aqueous sodium hydroxide solution. The alkali method can be carried out by, for example, immersing the metal substrate in an aqueous solution of sodium hydroxide or potassium hydroxide having a concentration of 3 to 20% by mass at 20 to 70°C for 1 to 15 min. A chelating agent, an oxidizing agent, or a phosphate may be added as an additive to the etching solution. After immersion, it is preferable that a neutralization (desmutting) with a 5 to 20% by mass nitric acid aqueous solution be carried out, followed by washing with water and drying.

### (Chemical conversion treatment)

A chemical conversion treatment forms a chemical conversion film as a surface treatment portion mainly on a surface of a metal substrate. Examples of the chemical conversion treatment include boehmite treatment and zirconium treatment. When the metal substrate is aluminum, the chemical conversion treatment is preferably a boehmite treatment.

In a boehmite treatment, a boehmite film is formed on a surface of a metal substrate by subjecting the metal substrate to a hydrothermal treatment. Ammonia or triethanolamine may be added as a reaction accelerator. For example, it is preferable that a metal substrate be immersed in 90 to 100°C hot water containing triethanolamine at a concentration of 0.1 to 5.0% by mass for 3 s to 5 min.

In a zirconium treatment, a zirconium compound coating is formed on a surface of a metal substrate by immersing the metal substrate in a zirconium salt-containing liquid such as zirconium phosphate. It is preferable that a metal substrate be immersed in a 45 to 70°C liquid of a chemical agent for zirconium treatment (for example, "Palcoat 3762" and "Palcoat 3796" manufactured by Nihon Parkerizing Co., Ltd.) for 0.5 to 3 min. The zirconium treatment is preferably carried out after the etching treatment by a caustic soda method.

When the metal substrate is aluminum, the metal substrate is preferably subjected to at least one surface treatment selected from etching treatment and boehmite treatment.

### <Functional group-containing layer>

One or more functional group-containing layers can also be provided on the surface of the metal substrate in contact with the film. Adhesive property between the surface of the metal substrate and the film can be improved by reacting functional groups in the functional group-containing layer with the hydroxy groups on the surface of the metal substrate and the functional groups of the resin constituting the film to form chemical bonds. As a result, the adhesive property (bonding property via the film) between the metal substrate and the resin member to be bonded can also be improved.

### [Treatment]

The functional group-containing layer is preferably formed by treating the surface of the metal substrate using at least one selected from the group consisting of (1') to (7') below.
(1') A silane coupling agent containing at least one functional group selected from the group consisting of a glycidyl group, an amino group, a (meth)acryloyl group, and a mercapto group
(2') A combination of at least one selected from glycidyl compounds and thiol compounds, and a silane coupling agent having an amino group
(3') A combination of at least one selected from the group consisting of glycidyl compounds, amino compounds, isocyanate compounds, compounds having a (meth)acryloyl group and a glycidyl group, and compounds having a (meth)acryloyl group and an amino group, and a silane coupling having a mercapto group
(4') A combination of a thiol compound and a silane coupling agent having a (meth)acryloyl group
(5') A combination of at least one selected from the group consisting of compounds having an amino group and a (meth)acryloyl group, amino compounds, and thiol compounds, and a silane coupling agent having a glycidyl group
(6') An isocyanate compound
(7') A thiol compound

### [Functional groups]

The functional group-containing layer preferably comprises the functional group introduced by the treatment, and preferably specifically comprises at least one functional group selected from the group consisting of (1) to (7) below.
(1) At least one functional group derived from a silane coupling agent and selected from the group consisting of a glycidyl group, an amino group, a (meth)acryloyl group, and a mercapto group
(2) A functional group generated by reacting an amino group derived from a silane coupling agent with at least one selected from glycidyl compounds and thiol compounds
(3) A functional group generated by reacting a mercapto group derived from a silane coupling agent with at least one selected from the group consisting of glycidyl compounds, amino compounds, isocyanate compounds, compounds having a (meth)acryloyl group and a glycidyl group, and compounds having a (meth)acryloyl group and an amino group
(4) A functional group generated by reacting a (meth)acryloyl group derived from a silane coupling agent with a thiol compound
(5) A functional group generated by reacting a glycidyl group derived from a silane coupling agent with at least one selected from the group consisting of compounds having an amino group and a (meth)acryloyl group, amino compounds, and thiol compounds
(6) An isocyanato group derived from an isocyanate compound
(7) A mercapto group derived from a thiol compound

Before forming a functional group-containing layer on the metal substrate, the surface of the metal substrate can be provided with the surface treatment portion described above. The adhesive property between the surface of the metal substrate and the film and the adhesive property (bonding property via the film) between the metal substrate and the resin member to be bonded can be further improved by the anchoring effect from the fine irregularities of the surface treatment portion and the chemical bonds formed by the reaction of the functional groups in the functional group-containing layer with each of the hydroxy groups on the surface of the metal substrate and the functional groups of the resin constituting the film.

The method of forming a functional group-containing layer using a silane coupling agent, an isocyanate compound, or a thiol compound is not particularly limited. Examples thereof include a spray coating method and an immersion method. Specifically, a metal substrate can be immersed in a room-temperature to 100°C solution having a concentration of 5 to 50% by mass of a silane coupling agent for 1 min to 5 days, followed by drying at room temperature to 100°C for 1 min to 5 h to form a functional group-containing layer.

### [Silane coupling agent]

Any known silane coupling agent used for surface treatment of glass fibers can be used as the silane coupling agent. Silanol groups generated by hydrolyzing a silane coupling agent or silanol groups of an oligomerized product generated by condensation of silanol groups react and bond with hydroxy groups present on the surface of the metal substrate, whereby functional groups based on the structure of a silane coupling agent capable of chemically bonding with the functional groups of the resin constituting the film can be imparted (introduced) to the metal substrate.

The silane coupling agent is not particularly limited. Examples thereof include silane coupling agents having an amino group such as N-2-(aminoethyl)-3-aminopropylmethyldimethoxysilane, N-2-(aminoethyl)-3-aminopropylmethyldimethoxysilane, N-2-(aminoethyl)-3-aminopropyltrimethoxysilane, 3-aminopropyltrimethoxysilane, and 3-aminopropyltriethoxysilane; silane coupling agents having an epoxy group such as 2-(3,4-epoxycyclohexyl)ethyltrimethoxysilane, 3-glycidoxypropylmethyltrimethoxysilane, 3-glycidoxypropylmethyldiethoxysilane, 3-glycidoxypropylmethyldiethoxysilane, and 3-glycidoxypropyltriethoxysilane; silane coupling agents having a mercapto group or an isocyanato group such as 3-mercaptopropylmethyldimethoxysilane, 3-isocyanatopropyltriethoxysilane, and dithioltriazinepropyltriethoxysilane; silane coupling agents having a vinyl group such as vinyltrimethoxysilane, vinyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane; 3-triethoxysilyl-N-(1,3-dimethyl-butylidene)propylamine, N-phenyl-3-aminopropyltrimethoxysilane, hydrochloride salts of N-(vinylbenzyl)-2-aminopropyltrimethoxysilane, tris(trimethoxysilylpropyl) isocyanurate, and 3-ureidopropyltrialkoxysilane. The silane coupling agent may be used alone, or two or more thereof may be used in combination.

### [Isocyanate compound]

For the isocyanate compound, isocyanato groups in the isocyanate compound react and bond with hydroxy groups present on the surface of the metal substrate, whereby functional groups based on the structure of an isocyanate compound capable of chemically bonding with the functional groups of the resin constituting the film can be imparted (introduced) to the metal substrate.

The isocyanate compound is not particularly limited. Examples thereof include polyfunctional isocyanates such as diphenylmethane diisocyanate (MDI), hexamethylene diisocyanate (HDI), tolylene diisocyanate (TDI), and isophorone diisocyanate (IPDI); and isocyanate compounds having a radical-reactive group such as 2-isocyanatoethyl methacrylate (for example, "Karenz MOI^{™}" manufactured by Showa Denko K.K.), 2-isocyanatoethyl acrylate (for example, "Karenz AOI^{™}" and "AOI-VM^{™}" manufactured by Showa Denko K.K.), and 1,1-(bisacryloyloxyethyl)ethyl isocyanate (for example, "Karenz BEI^{™}" manufactured by Showa Denko K.K.).

### [Thiol compound]

For the thiol compound, mercapto groups in the thiol compound react and bond with hydroxy groups present on the surface of the metal substrate, whereby functional groups based on the structure of a thiol compound capable of chemically bonding with the functional groups of the resin constituting the film can be imparted (introduced) to the metal substrate.

The thiol compound is not particularly limited. Examples thereof include pentaerythritol tetrakis(3-mercaptopropionate) (for example, "QX40" manufactured by Mitsubishi Chemical Corporation and "QE-340M" manufactured by Toray Fine Chemicals Co., Ltd.), ether-based primary thiols (for example, Capcure 3-800 manufactured by Cognis), 1,4-bis(3-mercaptobutyryloxy)butane (for example, "Karenz MT^{™} BD1" manufactured by Showa Denko K.K.), pentaerythritol tetrakis(3-mercaptobutyrate) (for example, "Karenz MT^{™} PE1" manufactured by Showa Denko K.K.), and 1,3,5-tris(3-mercaptobutyloxyethyl)-1,3,5-triazine-2,4,6(1H,3H,SH)-trione (for example, "Karenz MT^{™} NR1" manufactured by Showa Denko K.K.).

### <Metal member-resin member bonded body>

By bonding the resin member on the resin coating layer of the metal substrate, a metal member-resin member bonded body in which a metal member and a resin member are bonded together at a high bonding strength can be manufactured.

### <Resin member>

The resin member comprises a polyolefin. The polyolefin is not particularly limited. Examples thereof include polyethylene and polypropylene.

Polypropylene is generally classified into homopolymers having high rigidity obtained by polymerizing propylene only; a random polymer having high transparency and flexibility obtained by copolymerizing with a small amount of ethylene; and a block copolymer having high impact resistance in which a rubber component (EPR) is uniformly and finely dispersed in a homopolymer or random polymer. The polypropylene may comprise a homopolymer, a random polymer, a block polymer, or a mixture thereof. The polypropylene may be of a high-strength type containing talc, glass fibers, or carbon fibers. Examples of the talc-containing polypropylene include TRC104N (trade name) manufactured by SunAllomer Ltd. Examples of the glass fiber-containing polypropylene include PP-GF40-01 F02 (trade name) manufactured by Daicel Miraizu Ltd. Examples of the carbon fiber-containing polypropylene include PP-CF40-01 F008 (trade name) manufactured by Daicel Miraizu Ltd.

Glass fiber-containing polypropylene is a type of glass fiber-reinforced resin (GFRP), and carbon fiber-containing polypropylene is a type of carbon fiber-reinforced resin (CFRP). Resins comprising reinforcing fibers such as glass fibers and carbon fibers may be in the form of molded bodies such as sheet molding compound (SMC) and bulk molding compound (BMC). SMC is a sheet-like molded body obtained by impregnating reinforcing fibers such as glass fibers or carbon fibers with a resin composition obtained by mixing polypropylene, and a low shrinkage agent, a filler, etc.

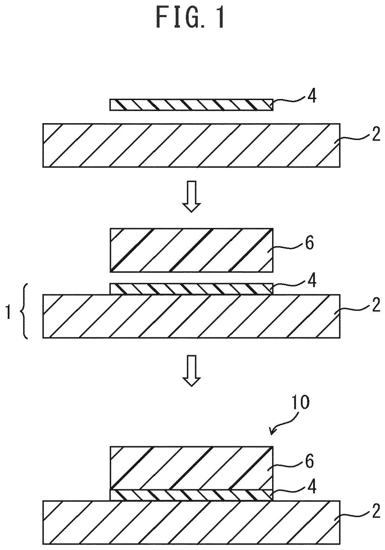

In one embodiment, the metal member-resin member bonded body is manufactured by producing each of the metal member and the resin member separately and then bonding (adhering) these together. The bonding can be carried out by at least one method selected from the group consisting of an ultrasonic welding method, a vibration welding method, an electromagnetic induction method, a radiofrequency method, a laser method, and a heat press method. In FIG. 1, which is an explanatory view of this embodiment, a film 4 and a metal substrate 2 are prepared (top), and the film 4 is placed on at least a portion of a surface of the metal substrate 2 so that the modified polyolefin layer is exposed to form a metal member 1 in which a resin coating layer (derived from the film 4) is laminated on the metal substrate 2 (middle), and then a separately produced resin member 6 is bonded on the resin coating layer (derived from the film 4) of the metal member 1 to manufacture a metal member-resin member bonded body 10 (bottom). According to this embodiment, since an apparatus such as an injection molding machine is not required for manufacturing the metal member-resin member bonded body, there is a high degree of freedom in the dimensions and shape of the metal member or the resin member, and a metal member-resin member bonded body having a large size or a complicated shape can be conveniently manufactured.

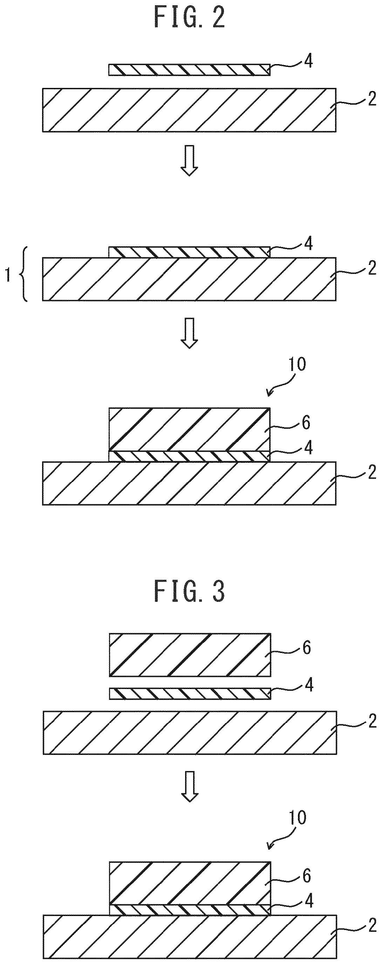

In another embodiment, the metal member-resin member bonded body is manufactured by molding the resin member and bonding (adhering) the metal member and the resin member together simultaneously. Specifically, the bonding is carried out simultaneously with the molding of the resin member by injection molding, transfer molding, press molding, filament winding molding, or hand lay-up molding on the resin coating layer of the metal member. In FIG. 2, which is an explanatory view of this embodiment, a film 4 and a metal substrate 2 are prepared (top), the film 4 is placed on at least a portion of a surface of the metal substrate 2 so that the modified polyolefin layer is exposed to form a metal member 1 in which a resin coating layer (derived from the film 4) is laminated on the metal substrate 2 (middle), and a resin member 6 is molded on the resin coating layer (derived from the film 4) of the metal member 1 while the metal member and the resin member are bonded together to manufacture a metal member-resin member bonded body 10 (bottom). According to this embodiment, since separately molding the resin member is not required, the manufacturing steps for the metal member-resin member bonded body can be decreased.

### [Second embodiment: method for manufacturing metal member-resin member bonded body]

A method for manufacturing the metal member-resin member bonded body of the second embodiment comprises: preparing the above film; interposing the film between a metal substrate and a resin member so that the modified polyolefin layer is in contact with the resin member; and bonding the metal substrate and the resin member together via the film. The bonding can be carried out by at least one method selected from the group consisting of an ultrasonic welding method, a vibration welding method, an electromagnetic induction method, a radiofrequency method, a laser method, and a heat press method. In FIG. 3, which is an explanatory view of the second embodiment, a film 4 is arranged between a metal substrate 2 and a resin member 6 (top), the film 4 is interposed between the metal substrate 2 and the resin member 6 so that the modified polyolefin layer is in contact with the resin member 6, and the metal substrate 2 and the resin member 6 are bonded together via the film 4 to manufacture a metal member-resin member bonded body 10 (bottom). In the second embodiment, it can be assumed that the production of the metal member and the manufacture of the metal member-resin member bonded body are carried out simultaneously. When the metal substrate has a surface treatment portion and/or a functional group-containing layer, the film is arranged so as to be in contact with the surface treatment portion or the functional group-containing layer of the metal substrate. According to the second embodiment, the number of manufacturing steps for the metal member-resin member bonded body can be further decreased.

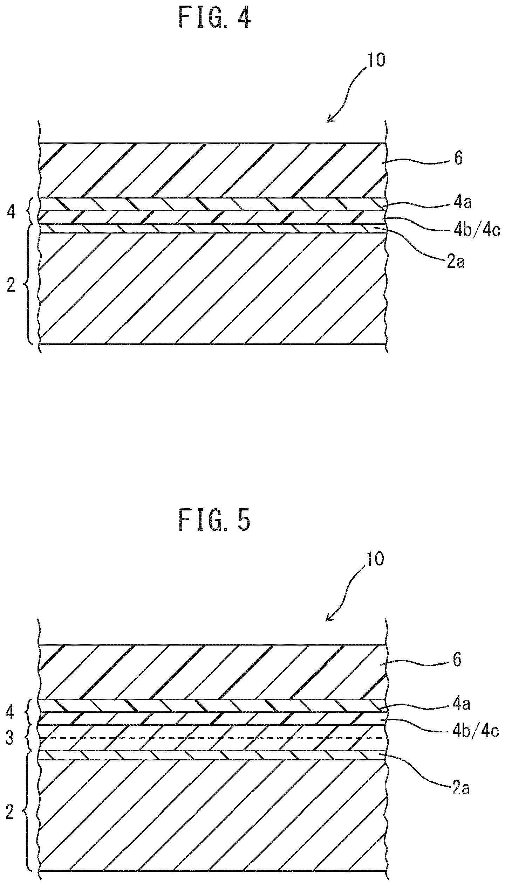

FIG. 4 shows a schematic cross-sectional view of a metal member-resin member bonded body of one embodiment. In the metal member-resin member bonded body 10 of FIG. 4, a metal substrate 2 having a surface treatment portion 2a and a resin member 6 are bonded together via a film 4 (resin coating layer). In FIG. 4, the film 4 has a multilayer structure comprising a modified polyolefin layer 4a; and a thermoplastic epoxy resin layer 4b and/or a curable resin layer 4c. The modified polyolefin layer 4a is arranged so as to be in contact with the resin member 6.

FIG. 5 shows a schematic cross-sectional view of a metal member-resin member bonded body of another embodiment. In the metal member-resin member bonded body 10 of FIG. 5, a functional group-containing layer 3 is arranged between a film 4 and a metal substrate 2, and the film 4 is laminated on the functional group-containing layer 3.

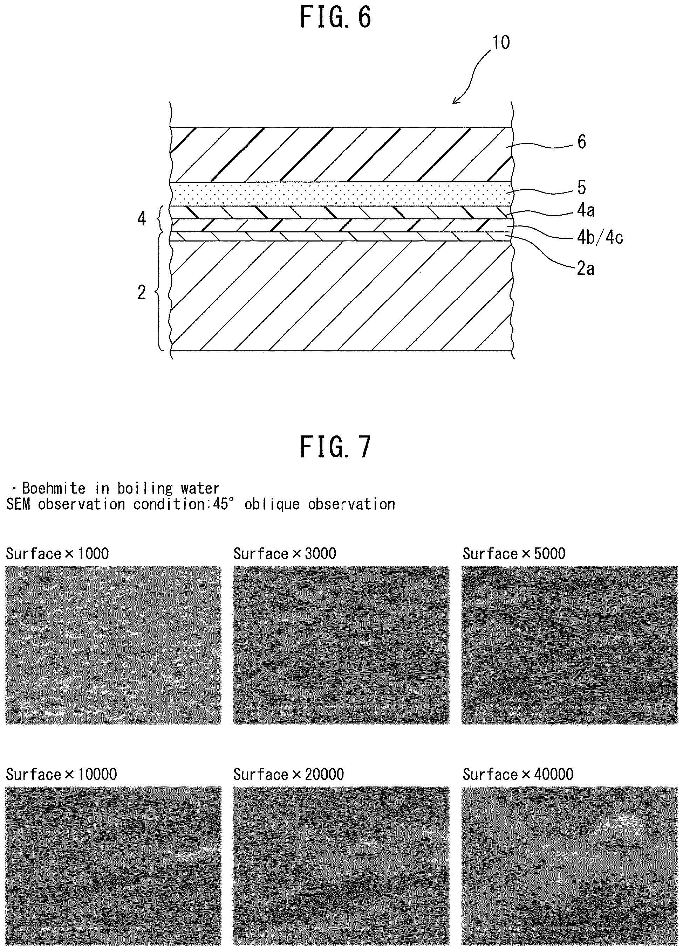

The metal member-resin member bonded body may have an adhesive layer arranged between the film (resin coating layer) and the resin member. FIG. 6 shows a schematic cross-sectional view of this embodiment. The metal member-resin member bonded body 10 has an adhesive layer 5 arranged between the film 4 (resin coating layer) and the resin member 6. Depending on the type of resin in the resin member, by using an adhesive layer, the metal substrate and the resin member can be bonded together at an even higher bonding strength.

The adhesive in the adhesive layer is appropriately selected according to the type of resin in the resin member. For example, any known adhesive such as an epoxy resin-based, a urethane resin-based, or a vinyl ester resin-based adhesive can be used.

Depending on the heating temperature at the time of bonding (adhesion), the metal member-resin member bonded body may be thermally deformed due to the difference in thermal expansion coefficients between the metal substrate and the resin member in the process of cooling to room temperature after bonding (adhesion). From the viewpoint of suppressing and mitigating such thermal deformation, it is desirable that the total thickness of the film (resin coating layer) and the adhesive layer be 4 µm or more. The total thickness described above is preferably determined in consideration of physical properties such as elongations of the film (resin coating layer) and the adhesive layer during temperature change at the time of bonding (temperature change from heating temperature at the time of bonding to room temperature cooling). A preferable upper limit of the total thickness of the film (resin coating layer) and the adhesive layer is 10 mm.

In the present disclosure, a layer involved in bonding between a metal member and a resin member is referred to as a bonding layer, and the thickness thereof is referred to as the thickness of the bonding layer. When the metal member-resin member bonded body has an adhesive layer, both the film (resin coating layer) and the adhesive layer are bonding layers, and the total thickness of the film (resin coating layer) and the adhesive layer is the thickness of the bonding layer. When the metal member-resin member bonded body does not have an adhesive layer, the film (resin coating layer) is the bonding layer, and the thickness thereof is the thickness of the bonding layer.

The method for manufacturing a metal member-resin member bonded body and the film of the present disclosure can be used in manufacturing automobile parts such as door side panels, bonnet roofs, tailgates, steering hangers, A pillars, B pillars, C pillars, D pillars, crash boxes, power control unit (PCU) housings, electric compressor parts (inner wall, intake port, exhaust control valve (ECV) insert, and mounting boss), lithium-ion battery (LIB) spacers, battery cases, and LED headlamps; and electrical and electronic products such as smartphones, laptops, tablets, smart watches, large liquid crystal display televisions (LCD-TVs), and outdoor LED lighting.

Several embodiments of the present invention have been described. However, the present invention is not limited to the embodiments described above, and various modifications can be made without departing from the spirit of the present invention.

### EXAMPLES

The Examples and Comparative Examples of the present invention will be specifically described. However, the present invention is not limited to these Examples.

### <Resin member for test piece: resin member A>

Under the conditions shown in Table 1, an injection molding machine (SE100V, manufactured by Sumitomo Heavy Industries, Ltd.) was used to produce a resin member A (width of 10 mm, length of 45 mm, thickness of 3 mm) used as a test piece for tensile testing.

### [Table 1]

**Table 1**

| Resin | Product number | Supply source | Cylinder temp. [°C] | Mold temp. [°C] | Injection speed [mm/sec] | Dwell pressure [MPa/sec] | Cooling time [sec] |
|---|---|---|---|---|---|---|---|
| PP (talc 30% by mass) | TRC104N | SunAllomer Ltd. | 210 | 30 | 50 | 195/7 | 10 |

### <Manufacturing Example 1: modified PP-1 >

A maleic anhydride-modified polypropylene (Modic^{™} ER321P, manufactured by Mitsubishi Chemical Corporation): 5 g and xylene: 95 g were put into a flask and dissolved by heating to 125°C while stirred. A bifunctional epoxy resin (jER^{™} 1001: polycondensation product of bisphenol A and epichlorohydrin, manufactured by Mitsubishi Chemical Corporation): 1.01 g, bisphenol A: 0.24 g, and 2,4,6-tris(dimethylaminomethyl)phenol: 0.006 g were then charged in the flask and stirred at 125°C for 30 min to obtain a xylene solution of modified PP-1: a maleic anhydride-modified polypropylene modified with a thermoplastic epoxy resin, the bifunctional epoxy resin, and the bifunctional phenol compound.

### <Manufacturing Example 2: modified PP-2>

A maleic anhydride-modified polypropylene (Modic^{™} ER321P, manufactured by Mitsubishi Chemical Corporation): 5 g and xylene: 95 g were put into a flask and dissolved by heating to 125°C while stirred. A bifunctional epoxy resin (jER^{™} 1004, manufactured by Mitsubishi Chemical Corporation): 0.49 g, bisphenol A: 0.06 g, and 2,4,6-tris(dimethylaminomethyl)phenol: 0.003 g were then charged in the flask and stirred at 125°C for 30 min to obtain a xylene solution of modified PP-2: a maleic anhydride-modified polypropylene modified with a thermoplastic epoxy resin, the bifunctional epoxy resin, and the bifunctional phenol compound.

### <Manufacturing Example 3: aluminum substrate>

An aluminum plate made of A6063 aluminum alloy was molded by hot extrusion, and the extruded aluminum plate was cut into a length of 45 mm, a width of 18 mm, and a thickness of 1.5 mm. The surface thereof was smoothed by machining. The composition of the aluminum alloy was Si: 0.45% by mass, Fe: 0.21% by mass, Cu: 0.05% by mass, Mg: 0.75% by mass, Cr: 0.05% by mass, and the balance being Al and unavoidable impurities. The aluminum plate had a tensile strength of 240 MPa and a Young's modulus of 68 GPa.

The aluminum plate was immersed in an aqueous sodium hydroxide solution having a concentration of 5% by mass for 1.5 min, neutralized with an aqueous nitric acid solution having a concentration of 5% by mass, washed with water, and dried to carry out an etching treatment. The etched aluminum plate was then boiled in pure water for 10 min and thereafter baked at 250°C for 10 min to carry out a boehmite treatment to form a boehmite film on the surface of the aluminum plate.

The surface of the aluminum plate after the boehmite treatment was observed by SEM photography (scanning electron micrograph, 45° oblique observation). As shown in FIG. 7, formation of a boehmite film having whisker-like irregularities on the surface was confirmed.

The boehmite-treated aluminum plate was then immersed in a silane coupling agent solution of 2 g of 3-aminopropyltrimethoxysilane ("KBM-903", manufactured by Shin-Etsu Silicone Co., Ltd.; silane coupling agent) dissolved in 1000 g of industrial ethanol at 70°C for 20 min. Thereafter, the aluminum plate was taken out to dry, and a functional group-containing layer was thereby formed on the surface of the boehmite film. As a result, an aluminum substrate subjected to the etching treatment and having an amino group-containing layer on the boehmite film was produced.

### <Manufacturing Example 4: copper substrate>

A degreasing treatment with acetone was carried out on an 18 mm × 45 mm copper plate having a thickness of 1.5 mm as the metal substrate.

The degreased copper plate was immersed in a silane coupling agent solution of 0.5 g of 3-methacryloxypropyltrimethoxysilane (KBM-503, manufactured by Shin-Etsu Silicone Co., Ltd.; silane coupling agent) dissolved in 100 g of industrial ethanol at 70°C for 5 min. Thereafter, the copper plate was taken out to dry, and a functional group derived from the silane coupling agent was thereby introduced to the degreased surface of the copper plate. The copper plate was further immersed in a solution of 1,4-bis(3-mercaptobutyryloxy)butane (Karenz MT^{™} BD-1 manufactured by Showa Denko K.K.), which is a bifunctional thiol compound: 0.6 g and 2,4,6-tris(dimethylaminomethyl)phenol (DMP-30): 0.05 g dissolved in 150 g of toluene at 70°C for 10 min and then taken out to dry. As a result, a copper substrate having two functional group-containing layers (a methacryloyl group-containing layer and a mercapto group-containing layer) on the degreased surface was produced.

### <Manufacturing Example 5: iron substrate>

A sanding treatment was carried out on an 18 mm × 45 mm iron plate having a thickness of 1.5 mm as the metal substrate using #100 sandpaper to form fine irregularities on the surface of the iron plate. As a result, an iron substrate having a sanded surface was produced.

### <Manufacturing Example 6: magnesium substrate>

A sanding treatment was carried out on an 18 mm × 45 mm magnesium plate having a thickness of 1.5 mm as the metal substrate using #100 sandpaper to form fine irregularities on the surface of the magnesium plate. The same operation as in Manufacturing Example 4 was then carried out to form a functional group-containing layer on a sanded surface of the magnesium plate. As a result, a magnesium substrate having two functional group-containing layers (a methacryloyl group-containing layer and a mercapto group-containing layer) on the sanding treatment was produced.

### <Manufacturing Example 7: SUS substrate>

A sanding treatment was carried out on an 18 mm × 45 mm martensitic stainless (SUS403) steel plate having a thickness of 1.5 mm using #100 sandpaper to form fine irregularities on the surface of the stainless-steel plate. The same operation as in Manufacturing Example 3 was then carried out to form a functional group-containing layer on a sanded surface of the stainless-steel plate. As a result, an SUS substrate having an amino group-containing layer on the sanding treatment was produced.

Details of the metal substrates and functional group-containing layers of Manufacturing Examples 3 to 7 are shown in Table 2.

### [Table 2]

**Table 2**

| | Manufacturing Example 3 | Manufacturing Example 4 | Manufacturing Example 5 | Manufacturing Example 6 | Manufacturing Example 7 |
|---|---|---|---|---|---|
| Name | aluminum substrate | copper substrate | iron substrate | magnesium substrate | SUS substrate |
| Material | A6063 aluminum alloy extrusion | copper plate | iron plate | magnesium plate | SUS403 |
| Surface treatment portion | etching + boehmite | degreasing | sanding | sanding | sanding |
| Functional group-containing layer | amino group-containing layer (3-aminopropyltrim ethoxysilane) | methacryloyl group-containing layer (3-methacryloxypro pyltrimethoxysil ane) | - | methacryloyl group-containing layer (3-methacryloxypro pyltrimethoxysil ane) | amino group-containing layer (3-aminopropyltrim ethoxysilane) |
| | | mercapto group-containing layer (1,4-bis(3-mercaptobutyryl oxy)butane) | | mercapto group-containing layer (1,4-bis(3-mercaptobutyryl oxy)butane) | |
| Thickness [mm] | 1.5 | 1.5 | 1.5 | 1.5 | 1.5 |

### <Example 1: production of film A>

The modified PP-1 xylene solution was applied onto a release film to form a film so as to have a dry thickness of 30 µm and left in the air at room temperature for 30 min to volatilize the solvent, and a film A on the release film was thereby produced.

### <Example 2: production of film B>

In a 1-L flask equipped with a stirrer, a reflux condenser, and a thermometer, a bifunctional epoxy resin (jER^{™} 1001, manufactured by Mitsubishi Chemical Corporation): 100 g, bisphenol A: 24 g, and triethylamine: 0.4 g were dissolved in 250 g of xylene. The resulting solution was stirred at 150°C for 30 min to carry out a polyaddition reaction to obtain a xylene solution of a thermoplastic epoxy resin composition. The xylene solution of a thermoplastic epoxy resin composition was applied onto a release film to form a film so as to have a dry thickness of 30 µm and left in the air at room temperature for 30 min to volatilize the solvent, and a thermoplastic epoxy resin layer on the release film was thereby produced.

The modified PP-2 xylene solution was then applied to the surface of the thermoplastic epoxy resin layer to form a film so as to have a dry thickness of 30 µm. The coating film was left in the air at room temperature for 30 min to volatilize the solvent and then kept at 150°C for 30 min to produce a film B having a modified polyolefin layer and a thermoplastic epoxy resin layer.

### <Comparative Example 1: production of film C>

A solution of a maleic anhydride-modified polypropylene (Modic^{™} ER321P, manufactured by Mitsubishi Chemical Corporation): 5 g dissolved in xylene: 95 g was applied onto a release film to form a film so as to have a dry thickness of 30 µm and left in the air at room temperature for 30 min to volatilize the solvent, and a film C on the release film was thereby produced.

### <Example 3: metal member-resin member bonding>

In a drying oven at a temperature of 120°C, the film A peeled from the release film was crimped onto the functional group-containing layer of the aluminum substrate, and a metal member having a resin coating layer derived from the film A was produced.

The metal member and the resin member A were then stacked so that the resin coating layer of the metal member and the resin member A were in contact and the bonding portion had a length of 5 mm and a width of 10 mm to be ultrasonic-welded using an ultrasonic welding machine SONOPET-JII430T-M (28.5 kHz) manufactured by Seidensha Electronics Co., Ltd. A tensile test piece (metal member-resin member bonded body) in accordance with ISO 19095 was thereby produced.

### [Adhesive property evaluation]

After leaving the produced test piece (metal member-resin member bonded body) at room temperature for 1 day, the test piece was subjected to a tensile-shear strength test with a tensile tester (Autograph "AG-IS" universal testing machine, manufactured by Shimadzu Corporation; load cell at 10 kN, tensile speed at 10 mm/min, temperature of 23°C, and 50% RH) in accordance with ISO19095-1 to -4 to measure the bonding strength. The measurement results are shown in Table 3.

### <Example 4: injection mold bonding>

Except that the aluminum substrate of Example 3 was changed to an iron substrate, a resin coating layer of the metal member was produced by the same procedure as in Example 3. Thereafter, a glass fiber-filled polypropylene resin (PP resin) (PP-GF40-01 F02, manufactured by Daicel Miraizu Co., Ltd.) was injection-molded using an injection molding machine (SE100V, manufactured by Sumitomo Heavy Industries, Ltd.; cylinder temperature of 200°C, tool temperature of 30°C, injection speed of 50 mm/sec, and peak/holding pressures of 195/175 [MPa/MPa]) to mold a resin member while bonding the resin member to the metal member. A tensile test piece (PP resin, 10 mm × 45 mm × 3 mm, bonding portion length of 5 mm) (metal member-resin member bonded body) in accordance with ISO19095 was thereby produced. The bonding strength of the test piece was measured by the same method as in Example 3. The measurement results are shown in Table 3.

### <Example 5: sandwich bonding>

The film A peeled from the release film was interposed between the aluminum substrate and the resin member A so that the film A was in contact with the functional group-containing layer of the aluminum substrate. The aluminum substrate and the resin member A were stacked so that the bonding portion had a length of 5 mm and a width of 10 mm to be ultrasonic-welded using an ultrasonic welding machine SONOPET-JII430T-M (28.5 kHz) manufactured by Seidensha Electronics Co., Ltd. A tensile test piece (metal member-resin member bonded body) in accordance with ISO 19095 was thereby produced. The bonding strength of the test piece was measured by the same method as in Example 3. The measurement results are shown in Table 3.

### <Example 6: metal member-resin member bonding>

In a drying oven at a temperature of 120°C, the film B peeled from the release film was crimped onto the functional group-containing layer of the copper substrate so that the modified polyolefin layer was exposed, and a metal member having a resin coating layer derived from the film B was thereby produced.

The metal member and the resin member A were then stacked so that the resin coating layer of the metal member and the resin member A were in contact and the bonding portion had a length of 5 mm and a width of 10 mm to be ultrasonic-welded using an ultrasonic welding machine SONOPET-JII430T-M (28.5 kHz) manufactured by Seidensha Electronics Co., Ltd. A tensile test piece (metal member-resin member bonded body) in accordance with ISO19095 was thereby produced. The bonding strength of the test piece was measured by the same method as in Example 3. The measurement results are shown in Table 3.

### <Example 7: injection mold bonding>

Except that the copper substrate of Example 6 was changed to an SUS substrate, a resin coating layer of the metal member was produced by the same procedure as in Example 6. Thereafter, a carbon fiber-filled polypropylene resin (PP resin) (PP-CF40-01 F008, manufactured by Daicel Miraizu Co., Ltd.) was injection-molded using an injection molding machine (SE100V, manufactured by Sumitomo Heavy Industries, Ltd.; cylinder temperature of 200°C, tool temperature of 30°C, injection speed of 50 mm/sec, and peak/holding pressures of 195/175 [MPa/MPa]) to mold a resin member while bonding the resin member to the metal member. A tensile test piece (PP resin, 10 mm × 45 mm × 3 mm, bonding portion length of 5 mm) (metal member-resin member bonded body) in accordance with ISO19095 was thereby produced. The bonding strength of the test piece was measured by the same method as in Example 3. The measurement results are shown in Table 3.

### <Example 8: sandwich bonding>

The film B peeled from the release film was interposed between the magnesium substrate and the resin member A so that the modified polyolefin layer of the film B was in contact with the resin member A and the thermoplastic epoxy resin layer was in contact with the functional group-containing layer of the magnesium substrate. The magnesium substrate and the resin member A were stacked so that the bonding portion had a length of 5 mm and a width of 10 mm to be ultrasonic-welded using an ultrasonic welding machine SONOPET-JII430T-M (28.5 kHz) manufactured by Seidensha Electronics Co., Ltd. A tensile test piece (metal member-resin member bonded body) in accordance with ISO 19095 was thereby produced. The bonding strength of the test piece was measured by the same method as in Example 3. The measurement results are shown in Table 3.

### <Comparative Example 2: metal member-resin member bonding>

Except that the film C was used in place of the film A, a tensile test piece (metal member-resin member bonded body) was produced by the same procedure as in Example 3. The bonding strength of the test piece was measured by the same method as in Example 3. The measurement results are shown in Table 3.

### [Table 3]

**Table 3**

| | | Example 3 | Example 4 | Example 5 | Example 6 | Example 7 | Example 8 | Comparative Example 2 |
|---|---|---|---|---|---|---|---|---|
| Bonding method | | metal member-resin member bonding | injection mold bonding | sandwich bonding | metal member-resin member bonding | injection mold bonding | sandwich bonding | metal member-resin member bonding |
| Metal substrate | | aluminum substrate | iron substrate | aluminum substrate | copper substrate | SUS substrate | magnesium substrate | aluminum substrate |
| Film | Type | film A | film A | film A | film B | film B | film B | film C |
| | Layer structure | modified PP-1 | modified PP-1 | modified PP-1 | modified PP-2/ thermoplastic epoxy resin layer | modified PP-2/ thermoplastic epoxy resin layer | modified PP-2/ thermoplastic epoxy resin layer | modified PP-1 |
| Resin member | | resin member A | PP with glass fibers injection molded | resin member A | resin member A | PP with carbon fibers injection molded | resin member A | resin member A |
| Bonding strength [MPa] | | 7.9 | 13.1 | 7.8 | 7.7 | 18.3 | 7.6 | 1.0 |

As can be seen from the evaluation results in Table 3, all of the metal member-resin member bonded bodies of Examples 3 to 8 had high bonding strength. The film A of Example 1 and the film B of Example 2 can be suitably used in manufacturing a metal member-resin member bonded body.

### INDUSTRIAL APPLICABILITY

The present invention can be used in manufacturing a metal member-resin member bonded body.

### REFERENCE SIGNS LIST

1: metal member
2: metal substrate
2a: surface treatment portion
3: functional group-containing layer
4: film (resin coating layer)
4a: modified polyolefin layer
4b: thermoplastic epoxy resin layer
4c: curable resin layer
5: adhesive layer
6: resin member
10: metal member-resin member bonded body

## Claims

1. A method for manufacturing a metal member-resin member bonded body, comprising:
preparing a film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin;
placing the film on at least a portion of a surface of a metal substrate so that the modified polyolefin layer is exposed to form a metal member having a resin coating layer laminated on the metal substrate; and
bonding a resin member onto the resin coating layer of the metal member.

2. The method according to claim 1, wherein the bonding is carried out by at least one method selected from the group consisting of an ultrasonic welding method, a vibration welding method, an electromagnetic induction method, a radiofrequency method, a laser method, and a heat press method.

3. The method according to claim 1, wherein the bonding is carried out simultaneously with molding of a resin member by injection molding, transfer molding, press molding, filament winding molding, or hand lay-up molding on the resin coating layer of the metal substrate.

4. A method for manufacturing a metal member-resin member bonded body, comprising:
preparing a film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin;
interposing the film between a metal substrate and a resin member so that the modified polyolefin layer is in contact with the resin member; and
bonding the metal substrate and the resin member together via the film.

5. The method according to claim 4, wherein the bonding is carried out by at least one method selected from the group consisting of an ultrasonic welding method, a vibration welding method, an electromagnetic induction method, a radiofrequency method, a laser method, and a heat press method.

6. The method according to any one of claims 1 to 5, wherein the reaction product 1 is obtained by subjecting a bifunctional epoxy resin and a bifunctional phenol compound to a polyaddition reaction in a solution comprising a maleic anhydride-modified polyolefin.

7. The method according to any one of claims 1 to 5, wherein the reaction product 2 is obtained by reacting a thermoplastic epoxy resin generated by a polyaddition reaction of a bifunctional epoxy resin and a bifunctional phenol compound with a maleic anhydride-modified polyolefin.

8. The method according to any one of claims 1 to 5, wherein the mixture is a mixture of polypropylene and a thermoplastic epoxy resin.

9. The method according to any one of claims 1 to 8, wherein the film is composed of a plurality of layers including the modified polyolefin layer and a layer other than the modified polyolefin layer, and at least one layer other than the modified polyolefin layer is at least one selected from a thermoplastic epoxy resin layer formed of a resin composition comprising a thermoplastic epoxy resin and a curable resin layer formed of a resin composition comprising a curable resin.

10. The method according to claim 9, wherein the curable resin is at least one selected from the group consisting of urethane resins, epoxy resins, vinyl ester resins, and unsaturated polyester resins.

11. The method according to any one of claims 1 to 10, wherein
the metal substrate has a functional group-containing layer laminated on a surface in contact with the film; and
the functional group-containing layer comprises at least one functional group selected from the group consisting of (1) to (7) below:
(1) at least one functional group derived from a silane coupling agent and selected from the group consisting of a glycidyl group, an amino group, a (meth)acryloyl group, and a mercapto group;
(2) a functional group generated by reacting an amino group derived from a silane coupling agent with at least one selected from a glycidyl compound and a thiol compound;
(3) a functional group generated by reacting a mercapto group derived from a silane coupling agent with at least one selected from the group consisting of a glycidyl compound, an amino compound, an isocyanate compound, a compound having a (meth)acryloyl group and a glycidyl group, and a compound having a (meth)acryloyl group and an amino group;
(4) a functional group generated by reacting a (meth)acryloyl group derived from a silane coupling agent with a thiol compound;
(5) a functional group generated by reacting a glycidyl group derived from a silane coupling agent with at least one selected from the group consisting of a compound having an amino group and a (meth)acryloyl group, an amino compound, and a thiol compound;
(6) an isocyanato group derived from an isocyanate compound; and
(7) a mercapto group derived from a thiol compound.

12. The method according to any one of claims 1 to 11, wherein a surface of the metal substrate is subjected to at least one surface treatment selected from the group consisting of blasting treatment, polishing treatment, etching treatment, and chemical conversion treatment.

13. A film comprising at least one modified polyolefin layer selected from the group consisting of a layer comprising a reaction product 1 of a maleic anhydride-modified polyolefin, a bifunctional epoxy resin, and a bifunctional phenol compound, a layer comprising a reaction product 2 of a maleic anhydride-modified polyolefin and a thermoplastic epoxy resin, and a layer comprising a mixture of a polyolefin and a thermoplastic epoxy resin.
